# EUROPEAN PATENT APPLICATION

(11) **EP 1 555 255 A1**
(43) Date of publication of application: **20.07.2005**
(21) Application number: 04460043.5
(22) Date of filing: 09.10.2004
(51) Int. Cl.: C05F 17/02, C02F 11/16, A22B 5/00

(54) **Device for utilization of organic waste material particularly animal by - products**

(30) Priority: 09.10.2003 PL 36272803
(71) Applicant: Niv, Andrzej, 05-091 Zabki (PL)
(72) Inventor: Niv, Andrzej, 05 - 091 Zabki (PL); Juchniewcz, Katarzyna, 88 - 410 Gasawa (PL)
(74) Representative: Marcinska-Porzuc, Aleksandra

(57) **Abstract**

The invention relates to a device for utilization of organic waste material, in particular animal by-products, comprising a flow-through revolving cylindrical insulated bioreactor with the continuous flow, placed on a frame, equipped with inwardly protruding internal manifold, temperature and moisture sensors and supported on rolling assemblies consisting of two casters. The device is characterized in that the revolving bioreactor vessel (3) is supported on an upper frame (6) via rolling assemblies (20), and the upper frame (6) is tiltably mounted on a bottom frame (1). The bottom frame (1) rests on load cells (2) for measuring the weight of the bioreactor vessel (3), the bioreactor vessel (3) being driven in rotary manner around a stationary manifold (8) through which water and air are supplied via every protruding downwardly perforated paddle (10), by means of a crankshaft mechanism (13) connected to an outlet vessel head (12), to an inlet vessel head (15) and to a drive.

## Description

The invention relates to a device for utilization of organic waste material, in particular animal by-products such as slaughter plant waste material, animal mortalities, meat processing plant waste material, manure, stomach contents, sewage sludge and other waste material from meat processing plants and rendering plants, as well as distilled grain solids, fish waste material, dried or wet cow manure, swine manure, municipal sewage treatment plant sludge, agricultural waste material and many others.

Utilization of biological waste material, both of plant origin as well as animal origin, becomes an increasing problem along with the industrialization of food production.

Commonly, utilization is achieved by incineration process in special incinerators using gas, natural gas and heating oil which is very expensive and wasteful or by anaerobic fermentation to obtain methane - biogas, or composting in aerobic conditions.

The patent PL 164568 describes a device for producing thermally processed manure material, which includes insulated flow-through kiln with a perforated drum revolving inside an insulation mantle of the kiln, the drum comprising axially and inwardly extending paddles, that move the material forwardly with revolutions of the drum, since the kiln is tilted towards the outlet. A plurality of gas or oil burners is located in the bottom of the kiln, which supply heat to the space between the insulation mantle and the outside surface of the drum. The heat penetrates through the perforation to the inside of the drum. The upper exhaust outlet is located in the middle of the kiln through which the combustion gases and large amounts of water vapor are emitted. The large portion of the water vapor is formed not only in the process of combustion but also is liberated from the manure or substrate, which is processed in the kiln. After heating, i.e., after drying, the hot batch is transferred from the outlet end of the kiln to a different process stage. A temperature sensor is placed at the outlet end to measure the temperature in the range of 90-100 °C.

This device is intended to process manure substrates as well as clean products, natural fertilizers and other materials.

A process of utilization of organic materials, in particular oiled knitting materials, synthetic yarn and wood shavings which are production waste materials, is known from PL 174223, the process basing on "coking".
The materials are shredded and mixed with liquefied coal fuel and thus obtained plastic mass is cooled down, pelletized and added to coal batch for coking process.

From the description of patent application PL 348385 a system for utilization of animal waste is known, which comprises a rotary reactor in form of a revolving cylinder, in which the batch, after shredding and sterilization in a sterilizer using steam, achieves 150 deg. C and is treated with calx. As the result of the reaction of calx with water complete decay of the waste material occurs and the temperature increases in the range of 700-1200 deg. C. The temperature is regulated by the amount of water. The resulting calcium hydroxide is evacuated from the reactor to a chimney. The resulting lime is removed from the reactor and stored for 30 days to complete the cooling process and the cooled lime is used to deacidification of soil or production of organic fertilizer.

The objective of the invention is a device for utilization of organic waste material, particularly animal by-products, in which biofuel or compost for horticulture use is obtained without the need of any further processing or separating any by-products of the utilization process.

This objective is achieved by placing a revolving bioreactor vessel on a plurality of rolling assemblies on an upper frame.
The upper frame is resting on a bottom frame with a hinge connecting the frames from one side to allow for tilting the upper frame in relation to the bottom frame. The bottom frame rests on several load cells allowing measurement of the bioreactor vessel mass. The bioreactor vessel comprises vessel heads and is driven to revolve around the long axis. The vessel heads are fixed via a crankshaft mechanism and make impossible motion about the long axis. A media manifold is equipped with a plurality of air injection pipes penetrating deep into the revolving biomass, through which water and air are injected as needed.

The device according to the invention is characterized in that every rolling assembly is resting on an air or hydraulic cushion with possibility to tilt vertically up and down and around the axle of an arm, which is attached to the upper frame. The cushions are interconnected hydraulically to allow for compensation of different pressures resulting from the shape of the bioreactor vessel. According to the invention, the roller assembly consists of two metal casters with elastic synthetic polymer runners, positioned one above the other on spigots with polymer sleeve bearing, tilting on the spigot at the end of the arm with the air cushion between the free end of the arm and the frame. Another characteristic feature of the invention is that the outside pipe is revolving around the stationary internal manifold connected via a crankshaft mechanism to the vessel heads.

The device is also characterized by the upper frame being tilted relative to the horizontal bottom frame by means of hydraulic cylinders.

The bioreactor is characterized by a heat exchanger for heating incoming air, which is connected to an exhaust pipe coming from one or both of the vessel heads. The device is characterized also by the division of the bioreactor vessel into at least three logical sections, each of them equipped with separate temperature and moisture sensors and each having its own external track lying on the rolling assemblies.

The device is also characterized by temperature, moisture, oxygen, carbon dioxide and ammonia sensors, load cells and proximity sensors installed within the bioreactor vessel, it is equipped with a drive, preferably an electric drive, and also air or hydraulic cushions and air pumps connected to electronic control panel and electrical panel which control the process of utilization of organic waste material.

The advantage of the invention is totally safe, full utilization of burdensome waste material giving a loose biomass which is directly used as biofuel, organic fertilizer or horticultural substrate. Thus obtained loose final product is chemically stable, hygienic, safe, uniform and smells like a forest duff.

Only few by-products can be left in the place of production without the need of difficult and hazardous transport to the place of utilization. The utilization process of the invention is quick such that the stabilization and hygienization of the waste material takes only 3-6 days. The waste material in the bioreactor is isolated from the environment from the beginning to the end of the process and its unpleasant smell disappears just within few hours from the start of the reaction. Since the bioreactor vessel is a closed vessel, there is no possibility of turning back or omitting any portion of the material. Temperature, humidity, oxygen, carbon dioxide, ammonia, and time are recorded continuously and archived without possibility of any change, while electronic weighing allows for quantitative estimation of the incoming as well as the produced material. Simultaneously it is assured that the biomass in the bioreactor vessel is subjected to temperature of 70°C over at least 1 hour, according to the thermal regimen as specified by the EU regulation 1774/2002.
Since no chemicals, elevated pressure or high temperature are used, the device makes the process to be totally safe and environmentally friendly. It has to be stressed that the odor from the byproducts completely disappears after few hours of operation and the exhaust heat is captured via the heat exchanger so it can be used to heat the incoming cold air, thus preventing thermal losses and improving reaction control.

The great advantage is the lack of any drainage, any leakage or sewage which would require further treatment. Thanks to locating the cylinder of the bioreactor vessel on the rolling assemblies, attached loosely on the tilting joint, leaning on the hydraulically adjusted air or hydraulic cushions on the upper frame, geometrical and mechanical stability of the bioreactor vessel body is achieved. This allows reduction of the thickness of the cylinder wall plate, which in turn considerably lowers the manufacture costs. Thus, the rolling assembly according to the invention may be employed to support revolving drums in other industrial applications.

The invention will now be described by way of example only with reference to the accompanying drawing, in which:
Fig.1 shows schematically a side view of the device according to the present invention, partially in section, in a horizontal position;
Fig.2 shows the device from Figure 1 in a temporary tilted position; and
Fig.3 shows the device from Figure 1 seen from the front of the outlet end.

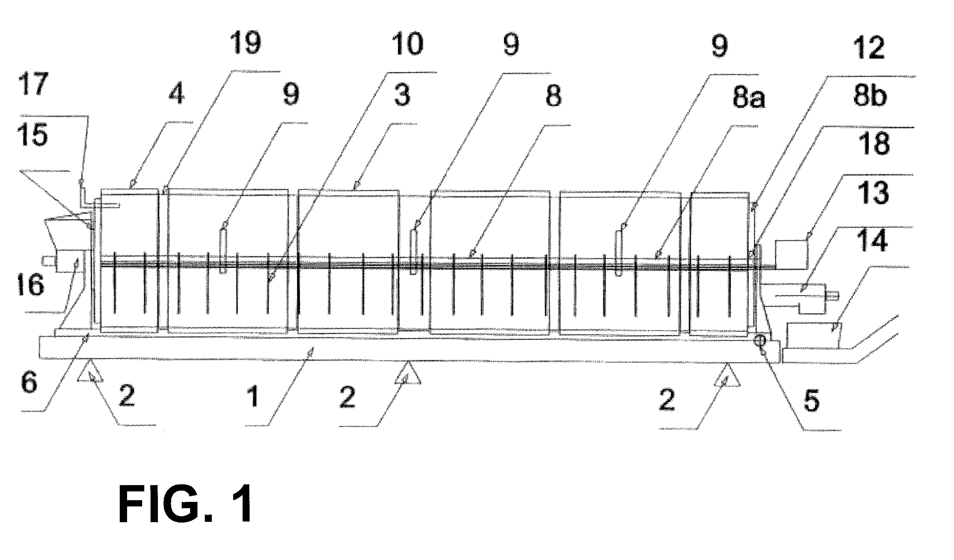

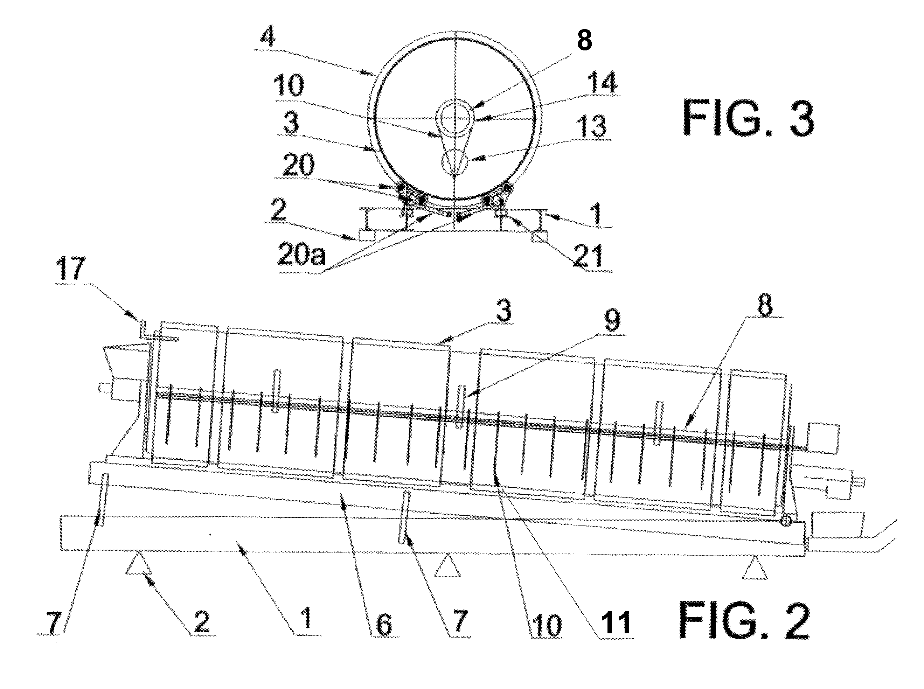

The device shown in Figs. 1-3 has the base - bottom frame 1 made from steel beams or profiles and having the shape of a rectangle. A pair of load cells 2 are installed below every longitudinal beam, which measure the weight of the bioreactor vessel 3, which has the shape of a revolving cylinder covered with an insulation mantle 4 and positioned on the tiltable upper frame 6 and connected to the bottom frame 1 via a pivot 5. To tilt the upper frame 6 with the bioreactor vessel 3 around the pivot 5 to the angle of 5 degrees (or more) relative to the horizon, at least 2 actuators/hydraulic cylinders 7 are used, preferably four. Of course, the number of the actuators used depends on the length of the bioreactor vessel 3.

As can be seen in Figure 1, the bioreactor vessel 3 is divided into 3 logical sections having separate temperature and moisture sensors and is revolving around the stationary manifold 8. The manifold 8 is equipped with a plurality of vertical paddles 10 placed along the entire length of the manifold 8. The manifold 8 is composed of an external pipe 8a and an eccentrically placed internal pipe 8b through which water and air are supplied. The internal pipe 8b is connected with each of the paddles 10, which are equipped with marked outlet orifices 11. From the intake side the bioreactor vessel 3 is closed by inlet vessel head 15. The crankshaft mechanism 13 is attached to the inlet vessel head 15 and to the outlet vessel head 12 to allow for revolutions of the bioreactor vessel 3 without any revolving movement of the vessel heads 12, 15. This allows for movement of the bioreactor vessel 3 around the manifold 8 driven by (not shown) a drive, preferably an electric or a hydraulic drive. The manifold 8, and indeed its outer pipe 8a and its inner pipe 8b, is protruding through the vessel heads 12, 15 and various media like water, air and sensor cables are installed or connected to it. From the side of the outlet vessel head 12 the manifold 8 is equipped with a discharge auger 14 pointing at the collection hopper. At the other end the inlet vessel head 15 has a loading auger 16 with a hopper. An air exhaust pipe 17 is protruding from the vessel head 15, equipped with temperature, moisture, oxygen and carbon dioxide, and ammonia sensors. The internal atmosphere of the bioreactor 3 is evacuated through the exhaust pipe 17 and its temperature is 50-70°C. The hot air is directed to the heat exchanger 18, which serves to heat the incoming fresh air blown into the bioreactor vessel 3.
The cylinder of the bioreactor vessel 3 is equipped, at least in the intake section and the outlet section, with tracks 19, which surround the bioreactor vessel 3, and are elastically supported on the rolling assemblies 20. Every rolling assembly 20, consisting of 2 casters 20a, preferably equipped with polymer runners, for example made of polyurethane, is tiltably mounted on the upper frame 6 and supported by the air/hydraulic cushion 21 and is able to tilt in two axles. Air/hydraulic cushions 21 are interconnected hydraulically.

The process is controlled by an electronic control unit (preferably programmable logic controller PLC or a computer) to which the sensors 9 of temperature and humidity, carbon dioxide, oxygen, ammonia, the drive, air or hydraulic cushions 21, water and air valves and load cells 2 to measure the weight of the bioreactor vessel 3 are connected.

The process of the utilization in the device according to the invention is conducted in such a manner that shredded biomass in form of animal by-products, offal, animal carcasses, meat processing waste material, food processing waste material, catering waste material, animal manure, municipal sewage sludge, industrial sludge, green waste material, organic fraction of municipal garbage, structural material like sawdust, wood shavings, wood chips, straw, grass, leaves or dried brewery solids or agricultural waste material and many other materials are loaded into the bioreactor vessel 3 after mixing. The initially loaded amount is enough to fill 1/3 of the bioreactor vessel 3 capacity. After loading, the bioreactor vessel 3 revolves at speed of 2 rev/hour and approx. 200 liters of atmospheric air per 1 tone of the biomass is injected through the manifold 8 internal pipe 8b. After 5 hours the temperature of the batch rises naturally to approx. 30 degrees C and more.
The conditions are kept for 24 hours, and then next batch of the 1/3 capacity is prepared in the same manner.
On the third and the fourth day only 1/6 of the working capacity is added while the electronic control panel takes over the manual operations of the device. The weight of the bioreactor vessel 3, the temperature and moisture are continuously controlled, and the water content and the temperature are adjusted automatically.
On the fifth day the computer calculates the amount of the material that needs to be discharged in order to make space for next material in amount of the 1/5^{th} of the working capacity. To perform this, the bioreactor vessel 3 is tilted by hydraulic pistons/actuators 7 to the angle of 5-7 deg off the horizon and it starts to revolve at speed of 6-8 revolutions per hour. The discharge auger 14 starts to turn or the discharge gate 14 is open while a discharge conveyor starts. This is continued until the calculated amount of the processed material is discharged. Then the auger 14 stops (or the gate 14 closes), the bioreactor vessel 3 returns to horizontal position and revolutions of the bioreactor vessel are reduced back to the speed before the discharge operation. Space for the new batch is ready at the inlet vessel head 15 of the bioreactor vessel 3.
Thanks to the described procedure one can control the movement of the biomass material inside the bioreactor vessel 3. As a result, after initialization of the process one obtains a steady well-defined amount of uniform ready biomass. Thus obtained biomass has the consistency similar to wet wood shavings, it is homogeneous, hygienic, stable and smells like forest duff.
Because of these qualities, the final product can be directly burnt (after predrying) as fuel in power furnaces since its energetic value is 17-19 MJ/kg d.m. and amount of ash is between 2-18%. This feature has particular importance for industries producing large amounts of organic waste materials since they can save major energy costs by burning their own processed waste material as own home made biofuel. The ash from burning the product, when collected from furnaces is loose and can be used as a mineral soil supplement since it contains mainly calcium phosphate and other minerals and microelements. This biofuel is environment friendly and certified.

Optionally, the end product can be used as an organic fertilizer or a soil amendment because its soil structure forming value is similar to peat moss and its fertilizer value exceeds that of peat moss many times since it contains chemically stable insoluble but available to plants nitrogen, phosphorus, potassium and multitude of microelements which are slowly released to plants and do not permeate to the ground waters or the atmosphere.

## Claims

1. A device for utilization of organic waste material, in particular animal by-products, consisting of a flow-through revolving cylindrical insulated bioreactor, mounted on a frame, equipped with an internal manifold with vertical paddles, temperature sensors, humidity sensors and supported on rolling assemblies consisting of two rolling casters, **characterized in that** the revolving bioreactor vessel (3) is supported on an upper frame (6) via the rolling assemblies (20), and the upper frame (6) is mounted on a bottom frame (1) tiltably around a pivot axle (5), the bottom frame (1) resting on load cells (2) for measuring the weight of the bioreactor vessel (3), the bioreactor vessel (3) being driven in rotary manner around the stationary manifold (8) through which water and air are supplied via every protruding downwardly paddle (10) with orifice, by means of a crankshaft mechanism (13) connected to an outlet vessel head (12), to an inlet vessel head (15) and to a drive.

2. A device for utilization of organic waste material according to claim 1, **characterized in that** every rolling assembly (20) rests on the upper frame (6) via a tilt mechanism and is supported by air/hydraulic cushions (21) interconnected hydraulically.

3. A device for utilization of organic waste material according to claim 2, **characterized in that** the air/hydraulic cushion (21) is connected with a pressure control duct.

4. A device for utilization of organic waste material according to claim 1 or 2, **characterized in that** the rolling assembly (20) consists of two casters (20a) positioned in a rotary manner one beside each other and equipped with elastic runners (20b) made from a suitable polymer material.

5. A device for utilization of organic waste material according to claim 1, **characterized in that** the manifold (8) is composed of an external pipe (8a) and an eccentrically positioned internal pipe (8b).

6. A device for utilization of organic waste material according to claim 5, **characterized in that** the internal pipe (8b) is connected with each of the perforated paddles (10).

7. A device for utilization of organic waste material according to claim 1, **characterized in that** the upper frame (6) is tiltably supported on the bottom frame (1) via actuators/hydraulic pistons (7).

8. A device for utilization of organic waste material according to claim 1, **characterized in that** the bioreactor vessel (3) is equipped with a heat exchanger (18) for heating the introduced air, connected to the air exhaust (17) placed on the inlet vessel head (15).

9. A device for utilization of organic waste material according to claim 8, **characterized in that** the bioreactor vessel (3) is divided into at least three logical sections, each of them being equipped with its own sensors (9) of temperature and humidity and each of the sections being equipped with a circular track (19) for the rolling assemblies (20).

10. A device for utilization of organic waste material according to claim 9, **characterized in that** the sensors (9), oxygen, carbon dioxide, ammonia and tensometric (load cells) sensors (2), the drive, preferably an electric drive, the air/hydraulic cushions (21) and air pumps are connected to a control panel which controls the process of utilization of the organic waste material in the bioreactor vessel (3).
